# EUROPEAN PATENT APPLICATION

(11) **EP 2 549 001 A1**
(43) Date of publication of application: **23.01.2013**
(21) Application number: 11756000.3
(22) Date of filing: 07.02.2011
(51) Int. Cl.: D01F 9/10, C04B 35/80

(54) **INORGANIC FIBERS FOR FIBER BUNDLES, PROCESS FOR PRODUCTION OF THE INORGANIC FIBERS, INORGANIC FIBER BUNDLES FOR COMPOSITE MATERIAL PRODUCED USING THE INORGANIC FIBERS, AND CERAMIC-BASED COMPOSITE MATERIAL REINFORCED BY THE FIBER BUNDLES**

(30) Priority: 19.03.2010 JP 2010063405
(71) Applicant: Ube Industries, Ltd., Ube-shi Yamaguchi 755-8633 (JP)
(72) Inventor: SUZUKI, Michiyuki, Ube-shi Yamaguchi 755-8633 (JP); SHIMIZU, Kazutoshi, Ube-shi Yamaguchi 755-8633 (JP)
(74) Representative: Grünecker, Kinkeldey, Stockmair & Schwanhäusser
(86) International application number: PCT/JP2011/052563
(87) International publication number: WO 2011/114810

(57) **Abstract**

Disclosed are an inorganic fiber for fiber bundles which suppresses a decrease in the fiber strength due to damage of the fiber during the production of an inorganic fiber bundle for composite materials, avoids contact between the fibers in a fiber bundle during the production of a composite material, and is capable of forming an interface layer with the matrix over the entire surface of the fibers, a method for producing the inorganic fiber for the fiber bundles, and a ceramic-based composite material which uses an inorganic fiber bundle for composite materials including the inorganic fiber for fiber bundles, as a reinforcing fiber and a ceramic as a matrix, and exhibits sufficient strength, sufficient fracture energy and excellent durability when the composite material is subjected to stress in a high temperature oxidizing atmosphere. Also disclosed are an inorganic fiber for fiber bundles that constitutes an inorganic fiber bundle for composite materials, which meanders in the longitudinal direction and has a meandering pitch of 3 mm to 40 mm and a meandering width of 0.1 mm to 5 mm, and a method for producing the inorganic fiber for fiber bundles.

## Description

### Technical Field

The present invention relates to an inorganic fiber for fiber bundles, a method for producing the same, an inorganic fiber bundle for composite materials including the inorganic fiber for fiber bundles, and a ceramic-based composite material reinforced with the fiber bundle.

### Background Art

Ceramic-based composite materials reinforced with inorganic fibers have excellent heat resistance that is not found in metals, and excellent damage tolerance that is not found in conventional monolithic ceramics, and therefore, the development thereof as next-generation heat resistant materials is underway. In regard to ceramic-based composite materials, since the bonding at the interface between reinforced fibers and a matrix is put under control, cracks are deflected at this interface upon fracture of the material, and fracture proceeds while the fibers are pulled out, the ceramic-based composite materials exhibit a significant feature of having large fracture energy. Among them, more attention is paid in particular to ceramic-based composite materials having non-oxide-based silicon carbide or silicon nitride as a matrix, and having the matrix reinforced with a silicon carbide fiber. Anticipated applications of these ceramic-based composite materials include the application of gas turbines and the like, and thus, durability in a high temperature oxidizing atmosphere is required.

As a method for producing a ceramic-based composite material, a preform is produced by forming a woven fabric of an inorganic fiber or the like as a reinforcing material into a desired shape. Subsequently, the sizing agent that is used for gathering of fiber bundles is removed by decomposition in an inert atmosphere of argon, nitrogen, or the like at a high temperature of equal to or higher than 600°C, and then an interface layer for controlling the bonding of the interface to the matrix is formed on the fiber surface by a chemical vapor deposition method (a CVD method or a CVI method). As the interface layer, carbon or boron nitride is mainly selected. Subsequently, a matrix is formed by a method of subjecting the preform similarly to a chemical vapor deposition method, or impregnating the matrix in a molten liquid or a solution of an inorganic or organic polymer that serves as a matrix raw material, subsequently calcining the matrix, and repeating this process as necessary (an impregnation-calcination method), and thereby, a ceramic-based composite material is obtained.

In regard to this production process, there has been pointed out a problem that when the respective fibers in a fiber bundle are brought into contact, a uniform interface layer is not formed at the contact points, and the characteristics of the composite material are adversely affected. For example, Non-Patent Literature 1 discloses that in a ceramic-based composite material of a silicon carbide matrix reinforced with a silicon carbide fiber, an interface layer of boron nitride is not uniformly formed at the contact points of the fibers in a fiber bundle, and when the material is subjected to stress in a high temperature oxidizing atmosphere, these fiber contact points are preferentially oxidized, and a glass layer of a oxide is formed. It has been pointed out that this glass layer causes strong bonding between fibers and causes stress concentration, so that brittle fracture occurs, and expected durability may not be obtained. Therefore, it is considered important to keep the respective fibers in a fiber bundle apart so that an interface layer can be uniformly formed on the fiber surfaces, in order to secure durability of the ceramic-based composite material. In order to address such problems, it has been suggested to attach short fibers, powders, or whiskers of heat resistant materials to the fiber surfaces (Patent Literatures 1 and 2, and Non-Patent Literature 2).

### Citation List

### Patent Literatures

Patent Literature 1: Japanese Patent Application Laid-Open (JP-A) No. 63-59473
Patent Literature 2: JP-A No. 62-299568

### Non-Patent Literatures

Non-Patent Literature 1: J. Am. Ceram. Soc., 83[6], 1441-49 (2000)
Non-Patent Literature 2: Mater. Trans., 44[6], 1172-80 (2003)

### Summary of Invention

### Technical Problem

However, although the contact between fibers in a fiber bundle can be avoided by attaching these heat resistant materials to the fiber surfaces, since heat resistant materials are not decomposed in a sizing agent removing step, an interface layer forming step, and a matrix forming step, the heat resistant materials remain in the composite material. Particularly, during the interface layer forming step, an interface layer is not formed on the fiber surfaces at the sites where a heat resistant material has been attached to the fiber surfaces, and the pullout of fibers is suppressed at the time of fracture. Therefore, the composite material thus obtainable does not exhibit sufficient fracture energy. Furthermore, heat resistant materials have high hardness similarly to inorganic fibers, and have different shapes so that even edged shapes are also available. Therefore, there has been a problem that heat resistant materials damage the fibers as a result of the friction with guides, rollers, and the like in the step of attaching a heat resistant material to fiber surfaces, or in the step of weaving the fibers into a fabric, causing a decrease in the fiber strength, and thus, the strength of the composite material thus obtainable is also decreased.

The present invention was made under such problems of the related art, and it is an object of the present invention to provide an inorganic fiber for fiber bundles, which is capable of suppressing a decrease in the fiber strength caused by damage of the fiber during the production of inorganic fiber bundles for composite materials, in order to obtain a ceramic-based composite material exhibiting sufficient strength and fracture energy, and excellent durability when subjected to stress in a high temperature oxidizing atmosphere, and which is capable of avoiding contact between fibers in a fiber bundle during the production of composite materials, and forming an interface layer between the fiber and a matrix over the entire surface of the fibers; a method for producing the inorganic fiber for fiber bundles; an inorganic fiber bundle for composite materials including the inorganic fiber for fiber bundles; and a ceramic-based composite material reinforced with the fiber bundle.

### Solution to Problem

The inventors of the present invention conducted a thorough investigation on an inorganic fiber bundle for composite materials which satisfies such conditions, and as a result, the inventors found that the object of the present invention described above can be achieved by gathering an inorganic fiber which meanders in the longitudinal direction and has a particular meandering pitch and a particular meandering width, into a fiber bundle.

Thus the present invention relates to an inorganic fiber for fiber bundles that constitutes an inorganic fiber bundle for composite materials, the inorganic fiber meandering in the longitudinal direction and having a meandering pitch of 3 mm to 40 mm and a meandering width of 0.1 mm to 5 mm.

Further, the present invention relates to the inorganic fiber for fiber bundles, wherein the element composition includes Si: 45% to 60% by mass, Ti or Zr: 0.2% to 5% by mass, C: 20% to 45% by mass, and O: 0.1% to 20.0% by mass.

Further, the present invention relates to the inorganic fiber for fiber bundles, wherein the inorganic fiber is a crystalline silicon carbide fiber having a sintered structure of SiC, which has a density of 2.7 g/cm³ or greater, a tensile strength of 2 GPa or greater, and an elastic modulus of 250 GPa or greater, and contains Si: 50% to 70% by mass, C: 28% to 45% by mass, Al: 0.06% to 3.8% by mass, and B: 0.06% to 0.5% by mass.

Further, the present invention relates to a method for producing an inorganic fiber for fiber bundles that constitutes an inorganic fiber bundle for composite materials, the method including spinning an organosilicon polymer, infusibilizing the spun fiber thus obtained, and calcining the infusibilized fiber thus obtained in an inert atmosphere, and the calcination treatment being carried out without applying a tension to the infusibilized fiber.

Further, the present invention relates to a method for producing an inorganic fiber for fiber bundles that constitutes an inorganic fiber bundle for composite materials, the method including calcining an amorphous silicon carbide-based fiber containing 0.05% to 3% by mass of Al, 0.05% to 0.4% by mass of B, and 1% to 3% by mass of excess carbon at a temperature of 1600°C to 2100°C and in an inert atmosphere, and crystallizing the calcined fiber, and the calcination treatment being carried out without applying a tension to the amorphous silicon carbide-based fiber.

Further, the present invention relates to an inorganic fiber bundle for composite materials, including the inorganic fiber for fiber bundles.

Further, the present invention relates to a ceramic-based composite material including the inorganic fiber bundle for composite materials as a reinforcing fiber, and a ceramic as a matrix.

Further, the present invention relates to the ceramic-based composite material, wherein the form of the inorganic fiber bundle for composite materials is a two-dimensional or three-dimensional fabric, a unidirectional sheet-like object, or a laminate thereof.

### Advantageous Effects of Invention

An inorganic fiber bundle for composite materials including the inorganic fiber for fiber bundles according to the present invention prevents the contact between fibers without damaging the fibers in the inorganic fiber bundle and allows formation of an interface layer over the entire surface of the respective fibers. Therefore, when the inorganic fiber bundle for composite materials according to the present invention is used, a ceramic-based composite material which exhibits sufficient strength and sufficient fracture energy, and exhibits excellent durability when the inorganic fiber bundle is subjected to stress in a high temperature oxidizing atmosphere, can be obtained.

### Brief Description of Drawings

FIG. 1 is an optical microscopic photograph illustrating the meandering pitch and meandering width of the inorganic fiber for fiber bundles according to the present invention.
FIG. 2 is a general view of a drooped fiber that is obtained in Example 1.
FIG. 3 is a general view of a calcined fiber that is obtained in Example 1.
FIG. 4 is a set of optical microscopic photographs of the cross-sections of the respective fiber bundles of (a) Example 1, (b) Example 2, (c) Comparative Example 1, (d) Example 3, (e) Comparative Example 2, (f) Example 4, and (g) Comparative Example 3.

### Description of Embodiments

The inorganic fiber for fiber bundles according to the present invention is preferably a silicon carbide-based fiber in view of heat resistance and oxidation resistance. The inorganic fiber for fiber bundles according to the present invention meanders in the longitudinal direction, and the meandering pitch is 3 mm to 40 mm, and preferably 5 mm to 15 mm, while the meandering width is 0.1 mm to 5 mm, and preferably 0.2 mm to 2 mm. Thereby, when the inorganic fiber is used to constitute a fiber bundle, spaces are generated due to meandering between the respective fibers in the fiber bundle, and the contact between the fibers in the fiber bundle can be almost avoided. Thus, an interface layer between the fiber and a matrix can be formed over the entire surface of the fibers. If the meandering pitch is smaller than 3 mm, the deviation of orientation due to the meandering of each fiber increases in the orientation direction of the fiber bundle in the composite material, the fiber strength does not work effectively, and the mechanical characteristics of the composite material are decreased, which is not preferable. If the meandering pitch is larger than 40 mm, the space generated by meandering becomes insufficient, and the contact between the fibers in a fiber bundle is increased, which is not preferable. If the meandering width is smaller than 0.1 mm, the space generated by meandering becomes insufficient, and the contact between the fibers in a fiber bundle is increased, which is not preferable. If the meandering width is larger than 5 mm, the deviation of orientation due to the meandering of each fiber increases in the orientation direction of the fiber bundle in the composite material, the fiber strength does not work effectively, and the mechanical characteristics of the composite material are decreased, which is not preferable.

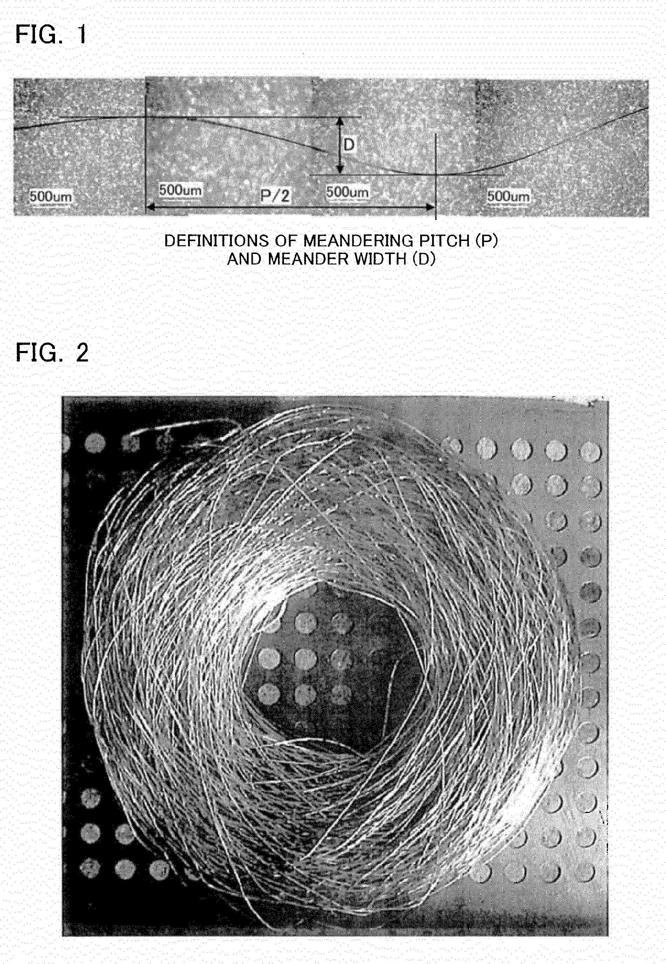

Here, in regard to the inorganic fiber for fiber bundle according to the present invention, the meandering in the longitudinal direction means a state in which a fiber is extended while meandering, and the meandering pitch means the distance in the direction of extension between the apexes of adjacent peaks or the apexes of adjacent valleys among the peaks and valleys repeatedly appearing in the direction of extension. The meandering width means the distance in a direction perpendicular to the direction of extension (width direction) between the apex of an arbitrary peak and the apex of a valley adjacent thereto among the peaks and valleys repeatedly appearing in the direction of extension. This meandering pitch can be determined by continuously taking images of one fiber in the longitudinal direction using an optical microscope as illustrated in FIG. 1, measuring the distance in the direction of extension between the apex of an arbitrary peak and the apex of a valley adjacent thereto from the optical microscopic photograph, and doubling the average value of ten such distances. Furthermore, the meandering width can be similarly determined by measuring the distance in the width direction between the apex of an arbitrary peak and the apex of a valley adjacent thereto using an optical microscope, and calculating the average value of ten such distances.

The inorganic fiber for fiber bundles according to the present invention is preferably such that the element composition contains Si: 45% to 60% by mass, Ti or Zr: 0.2% to 5% by mass, C: 20% to 45% by mass, and O: 0.1% to 20.0% by mass. When Ti or Zr is added, heat resistance is improved, and particularly, when Zr is added, oxidation resistance and alkali resistance can be improved. When an inorganic fiber bundle for composite materials including this inorganic fiber for fiber bundles is used as a reinforcing fiber, a ceramic-based composite material having excellent characteristics may be obtained.

Furthermore, the inorganic fiber for fiber bundles according to the present invention is preferably a crystalline silicon carbide fiber having a sintered structure of SiC, which has a density of 2.7 g/cm³ or greater, a tensile strength of 2 GPa or greater, and an elastic modulus of 250 GPa or greater, and contains Si: 50% to 70% by mass, C: 28% to 45% by mass, Al: 0.06% to 3.8% by mass, and preferably 0.13% to 1.25% by mass, and B: 0.06% to 0.5% by mass, and preferably 0.06% to 0.19% by mass. If the proportion of aluminum is excessively small, the alkali resistance of the crystalline silicon carbide fiber decreases, and if the proportion increases excessively, the mechanical characteristics at high temperatures are decreased. If the proportion of boron is excessively small, a crystalline fiber that has been sufficiently sintered is not obtained, and the density of the fiber is decreased. On the contrary, if the proportion is excessively large, alkali resistance of the fiber is decreased. A crystalline silicon carbide fiber which exhibits excellent heat resistance that is obtainable by making the fiber crystalline, high strength and elastic modulus, and excellent alkali resistance due to the presence of aluminum, can be obtained. When an inorganic fiber bundle for composite materials including this inorganic fiber for fiber bundles is used as a reinforcing fiber, a ceramic-based composite material having excellent characteristics may be obtained.

The method for producing an inorganic fiber for fiber bundles according to the present invention includes a spinning step of spinning an organosilicon polymer; an infusibilization step of infusibilizing the spun fiber thus obtained by a heat treatment in an oxidizing atmosphere or by irradiation with an electron beam; and a calcination step of calcining the infusibilized fiber thus obtained in an inert atmosphere or a reducing atmosphere.

In the spinning step, first, a Ti- or Zr-containing organosilicon polymer is prepared by allowing an organosilicon polymer which mainly contains a carbosilane (-Si-CH₂-) bonding unit and a polysilane (-Si-Si-) bonding unit and has a group selected from the group consisting of a hydrogen atom, a lower alkyl group, an aryl group, a phenyl group, and a silyl group in a side chain of silicon, to react under heating with a compound selected from the group consisting of an alkoxide, an acetylacetoxy compound, a carbonyl compound, a cyclopentadienyl compound, and an amine compound, all containing Ti or Zr. Subsequently, the spinning step is carried out by melt spinning this Ti- or Zr-containing organosilicon polymer.

The infusibilization step is carried out by, for example, infusibilizing the spun fiber thus obtained. Infusibilization can be carried out by employing a method that is known per se. The infusibilization process in an oxidizing atmosphere is carried out at a temperature of 50°C to 300°C, and the electron beam irradiation is carried out at an accelerating voltage of 2 MV to 4 MV at a dose rate of 2 KGy/second to 15 KGy/second, and at a dose of 10 MGy to 20 MGy.

The calcination step is carried out on the infusibilized fiber thus obtained, in an inert atmosphere and preferably at a temperature in the range of 1100°C to 1600°C, without applying a tension to the fiber. Accordingly, the fiber can be made to meander in the longitudinal direction. When it is said that a tension is not applied to the fiber, it implies that the process of inorganizing the infusibilized fiber at the time of calcination, is accompanied by weight reduction and shrinkage in the diameter direction and the longitudinal direction of the fiber, which consequently causes volume shrinkage, but volume shrinkage is not restrained. Thereby, in the process of inorganizing the infusibilized fiber, the fiber can be made to meander in the longitudinal direction.

The method of calcining the fiber without applying a tension at the time of calcination is carried out by performing spinning by a spinning can system, such that a predetermined length (usually, 500 m to 1000 m) of a fiber is spun on a tray into a circular shape having a diameter of 20 cm to 50 cm, and infusibilization is achieved through a heat treatment in an oxidizing atmosphere, or by irradiation with an electron beam. Subsequently, the method is achieved by calcining the infusibilized fiber in an inert atmosphere, using a calcination furnace of a batch system, or a pusher type calcination furnace which is capable of continuously calcining plural trays on which infusibilized fibers are placed.

Alternatively, spinning is carried out by a method of continuously winding the fiber on a drum, subsequently a predetermined length (usually, 500 m to 1000 m) of the fiber is drooped down on a tray into a circular shape having a diameter of 20 cm to 50 cm, and then infusibilization of the fiber is carried out. Alternatively, the fiber is infusibilized, and then a predetermined length (usually, 500 m to 1000 m) of the fiber is drooped down on a tray into a circular shape having a diameter of 20 cm to 50 cm. Thereafter, the fiber may be calcined in an inert atmosphere by using a calcination furnace of a batch system, or a pusher type calcination furnace which is capable of continuously calcining plural trays on which infusibilized fibers are placed, as described above.

The spun fiber or infusibilized fiber has low strength, and there is a possibility that the fiber may be fractured in the drooped down process. Thus, the fiber is spun by a method of continuously winding the fiber on a drum and infusibilized, and subsequently, the fiber is first continuously calcined at 500°C to 800°C in an inert atmosphere, and then is wound on a bobbin in a state in which the fiber strength has been increased without inorganizing the fiber. Thereafter, a predetermined length (usually, 500 m to 1000 m) of the fiber may be drooped down on a tray into a circular shape having a diameter of 20 cm to 50 cm, and then the fiber may be calcined in an inert atmosphere by using a calcination furnace of a batch system, or a pusher type calcination furnace which is capable of continuously calcining plural trays on which fibers are placed, as described above.

At this time, if the temperature of performing continuous calcination is below 500°C, the fiber strength increasing effect is absent, and only the number of steps is increased. Therefore, it is not preferable. At the temperature higher than 800°C, inorganization proceeds during the calcination process, and thereafter, the weight reduction and volume shrinkage upon calcination occur insufficiently, so that the meandering pitch becomes larger than 40 mm, while the meandering width is less than 0.1 mm. Thus, it is not preferable.

The inorganic fiber for fiber bundles according to the present invention is calcined in an inert atmosphere, and then is transferred and wound on a bobbin, and thus the inorganic fiber for fiber bundles can be supplied for practical use as an inorganic fiber bundle for composite materials. At this time, for the purpose of enhancing the handleability of the fiber bundle, it is preferable to immerse the inorganic fiber in a water, an organic solvent, or a mixture liquid of both, in which a resinous sizing agent is dissolved, and wind up the fiber while drying the fiber.

As the resinous sizing agent, any resin that is known per se can all be used, and specific examples thereof include a poval (polyvinyl alcohol) resin, a polyethylene oxide, an epoxy resin, a modified epoxy resin, a polyester resin, a polyimide resin, a phenolic resin, a polyurethane resin, a polyamide resin, a polycarbonate resin, a silicon resin, a phenoxy resin, polyphenylene sulfide, a fluororesin, a hydrocarbon-based resin, a halogen-containing resin, an acrylic acid-based resin, and an ABS resin. Particularly, a poval (polyvinyl alcohol) resin and a polyethylene oxide are particularly preferred because they are used in the inorganic fibers that are commercially available. The amount of attachment is not particularly limited, but the amount of attachment is preferably 0.01% to 10% by mass, and particularly preferably 0.1% to 5% by mass, based on the inorganic fiber. If the amount of attachment is less than 0.01% by mass, a fiber bundle may not be gathered, and if the amount of attachment is larger than 10% by mass, the sizing agent is used in waste, without any change in the extent of gathering.

After the calcination in a calcination furnace of a batch system, or in a pusher type calcination furnace which is capable of continuously calcining plural trays on which infusibilized fibers are placed, because the shape spun by a spinning can method or the curl of the drooped circular shape remains, the fiber bundle may be continuously calcined in an inert atmosphere at 1100°C to 1500°C without applying a tension as far as possible, and may be transferred and wound on a bobbin, while maintaining the meandering pitch and the meandering width and while removing this curl.

When the inorganic fiber for fiber bundles according to the present invention is a crystalline silicon carbide fiber having a sintered structure of SiC, the inorganic fiber for fiber bundles can be obtained by subjecting an amorphous silicon carbide-based fiber containing 0.05% to 3% by mass of Al, 0.05% to 0.4% by mass of B, and 1% to 3% by mass of excess carbon, to a calcination treatment in an inert atmosphere at a temperature in the range of 1600°C to 2100°C, without applying a tension, and thereby crystallizing the calcined fiber. When it is said that a tension is not applied to the fiber, it implies that the process in which an amorphous silicon carbide-based fiber is crystallized upon heating, is accompanied by weight reduction and shrinkage in the diameter direction and the longitudinal direction of the fiber, which consequently causes volume shrinkage, but volume shrinkage is not restrained. Thereby, a crystalline silicon carbide fiber having the meandering pitch and the meandering width described above can be provided. The amorphous silicon carbide-based fiber preferably contains 8% to 16% by mass of oxygen. When the amorphous silicon carbide-based fiber is heated, this oxygen detaches the excess carbon described above in the form of CO gas, the ratio of Si and C is adjusted close to the stoichiometric ratio of SiC, and thereby a crystalline silicon carbide fiber can be obtained.

As the method of performing a calcination treatment without applying a tension to the fiber, a predetermined length (usually, 500 m to 1000 m) of the amorphous silicon carbide-based fiber is drooped down on a tray in a circular shape having a diameter of 20 cm to 50 cm. Subsequently, the method is achieved by subjecting the fiber to a calcination treatment in an inert atmosphere at 1600°C to 2100°C, by using a calcination furnace of a batch system, or a pusher type calcination furnace which is capable of continuously calcining plural trays on which the fiber is placed, and crystallizing the fiber. After the calcination treatment in an inert atmosphere, the fiber is transferred and wound on a bobbin, and thus the inorganic fiber can be supplied for practical use as an inorganic fiber bundle for composite materials according to the present invention. At this time, for the purpose of enhancing the handleability of the fiber bundle, it is preferable to immerse the inorganic fiber in a water, an organic solvent, or a mixture liquid of both, in which a resinous sizing agent is dissolved as described above, and wind up the fiber while drying the fiber. Furthermore, a method of performing the calcination treatment without applying a tension, which is different from the method described above, can also be used.

This amorphous silicon carbide-based fiber can be prepared by, for example, a method such as described below. First, for example, one or more kinds of dichlorosilane are subjected to a dechlorination reaction by means of sodium according to a method described in "Chemistry of Organosilicon Compounds, "Kagaku Dojin Co., Ltd. (1972), and thereby a linear or cyclic polysilane is prepared. The number average molecular weight of the polysilane is usually 300 to 1000. According to the present specification, the polysilane also includes a polysilane having carbosilane bonds in some part, which is obtainable by heating a linear or cyclic polysilane described above at a temperature in the range of 400°C to 700°C, or by adding a phenyl group-containing polyborosiloxane to a linear or cyclic polysilane described above, and heating the mixture at a temperature in the range of 250°C to 500°C. The polysilane may have a hydrogen atom, a lower alkyl group, an aryl group, a phenyl group, or a silyl group as a side chain of silicon.

Subsequently, a predetermined amount of an alkoxide, an acetylacetoxide compound, a carbonyl compound, or a cyclopentadienyl compound, all containing aluminum is added to the polysilane, and the mixture is allowed to react for 1 to 10 hours at a temperature in the range of usually 250°C to 350°C in an inert gas. Thereby, an aluminum-containing organosilicon polymer, which is a spinning raw material, is prepared. The amount of the aluminum compound used is usually 0.14 millimoles to 0.86 millimoles per 1 g of the polysilane.

The aluminum-containing organosilicon polymer is spun according to a method that is known per se, such as melt spinning or dry spinning, and thus a spun fiber is prepared. Subsequently, this spun fiber is subjected to an infusibilization treatment in an oxidizing atmosphere to prepare an infusibilized fiber, and then the infusibilized fiber is calcined at a temperature in the range of 1100°C to 1600°C in an inert gas such as nitrogen or argon. Thus, an amorphous silicon carbide-based fiber is prepared.

The ceramic-based composite material according to the present invention is characterized in that the inorganic fiber bundle for composite materials obtained as described above is used as a reinforcing fiber, and a ceramic material is used as a matrix. There are no particular limitations on the form of this inorganic fiber bundle for composite materials, and a two-dimensional or three-dimensional fabric such as a plane weave or a sateen weave, a unidirectional sheet-like material, or a laminate material thereof. There are no particular limitations on the volume ratio of the inorganic fiber in the composite material, but the volume ratio is generally 10% to 50%.

The method for compositization is not particularly limited, but use can be made of a polymer impregnation/calcination method of performing compositization by coating a preform obtained by weaving an inorganic fiber, with boron nitride or carbon as an interface layer, subsequently impregnating the preform with a solution prepared by dissolving a precursor polymer of a ceramic, such as polycarbosilane, polymetallocarbosilane, or polysilazane in a solvent such as xylene, drying the preform, and then heating and calcining the dried preform; a method of impregnating a preform with a slurry of the raw material powder of the matrix, and sintering the preform under pressure at a high temperature by using a hot press or the like; a sol-gel method of using an alkoxide of a matrix element as a raw material; or a chemical vapor deposition method of forming a matrix by a reaction of a reactive gas at a high temperature; and a reaction sintering method of impregnating a preform with a molten metal at a high temperature, and ceramicizing the metal through a reaction. Furthermore, there is also available a method of forming a portion of the matrix by a chemical vapor deposition method, and then densifying the remaining space by a reaction sintering method or a polymer impregnation/calcination method.

As the ceramic matrix of the present invention, crystalline or amorphous oxide ceramics, crystalline or amorphous non-oxide ceramics, glasses, crystallized glasses, mixtures of these, and dispersions of particles of these ceramics are preferred.

Specific examples of the oxide ceramics include oxides of elements such as aluminum, magnesium, silicon, yttrium, indium, uranium, calcium, scandium, tantalum, niobium, neodymium, lanthanum, ruthenium, rhodium, beryllium, titanium, tin, strontium, barium, zinc, zirconium, and iron; and complex oxides of these metals.

Specific examples of the non-oxide ceramics include carbides, nitrides, and borides. Specific examples of the carbides include carbides of elements such as silicon, titanium, zirconium, aluminum, uranium, tungsten, tantalum, hafnium, boron, iron, and manganese; and complex carbides of these elements. Examples of these complex carbides include inorganic substances obtainable by heating and calcining polytitanocarbosilane or polyzirconocarbosilane. Specific examples of the nitrides include nitrides of elements such as silicon, boron, aluminum, magnesium, and molybdenum; complex oxides of these elements; and sialon. Specific examples of the borides include borides of elements such as titanium, yttrium, and lanthanum; and rare earth-platinum group-borides such as CeCoB₂, CeCo₄B₄, and ErRh₄B₄.

Specific examples of the glasses include amorphous glasses such as silicate glass, phosphate glass, and borate glass. Specific examples of the crystallized glasses include LiO₂-Al₂O₃-MgO-SiO₂-based glass and LiO₂-Al₂O₃-MgO-SiO₂-Nb₂O₅-based glass, whose main crystal phase is β-spodumene; MgO-Al₂O₃-SiO₂-based glass whose main crystal phase is cordierite; BaO-MgO-Al₂O₃-SiO₂-based glass whose main crystal phase is barium osumilite; BaO-Al₂O₃-SiO₂-based glass whose main crystal phase is mullite or hexacelsian; and CaO-Al₂O₃-SiO₂-based glass whose main crystal phase is anorthite. The crystal phases of these crystallized glasses may include cristobalite. Examples of the ceramics according to the present invention include solid solutions of various ceramics described above.

Specific examples of products obtained by reinforcing ceramics by particle dispersion include ceramics in which spherical particles, polyhedral particles, plate-shaped particles, rod-shaped particles, or whiskers of inorganic substances selected from silicon nitride, silicon carbide, zirconium oxide, magnesium oxide, potassium titanate, magnesium borate, zinc oxide, titanium boride, and mullite, are uniformly dispersed in the ceramic matrices described above at a proportion of 0.1% to 60% by volume. The particle size of the spherical particles and polyhedral particles is 0.1 µm to 1 mm, and the aspect ratio of the plate-shaped particles, rod-shaped particles, and whiskers is generally 1.5 to 1000.

### Examples

Next, the present invention will be described more specifically by way of Examples, but the present invention is not intended to be limited to the following Examples.

### Example 1

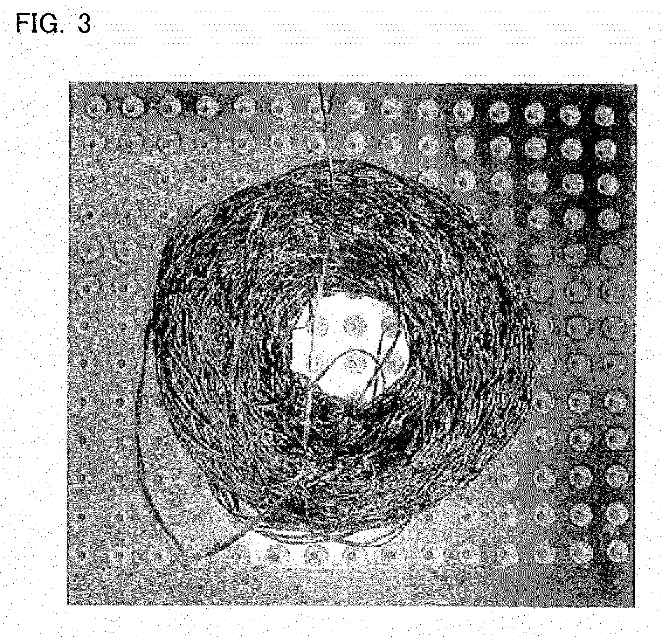

0.5 parts by mass of polyborodiphenylsiloxane was added to 100 parts by mass of polydimethylsilane, and this mixture was heated to react for 10 hours at 380°C in a nitrogen atmosphere. Thus, about 70 parts by mass of a polycarbosilane having a weight average molecular weight of 1000 was synthesized. To this polycarbosilane, 5 parts by mass of zirconium acetylacetonate was added, and the mixture was heated to react for 3 hours at 300°C in a nitrogen atmosphere to obtain polyzirconocarbosilane. This polyzirconocarbosilane was subjected to melt spinning through an 800-multihole nozzle while the fiber was continuously wound on a drum at about 250°C. Subsequently, the fiber was infusibilized by heat treating the fiber at 180°C for 5 hours in air. Subsequently, the fiber was subjected to continuous calcination at 600°C in a nitrogen atmosphere, and the resultant fiber was immersed in an aqueous solution to which polyethylene oxide was added at a proportion of 1% by mass, and was wound on a bobbin while drying at 200°C. Subsequently, 700 m of the fiber was drooped down on a tray made of carbon into a circular shape having a diameter of about 30 cm. FIG. 2 illustrates the general appearance of the drooped fiber. Ten sets of this fiber were produced, and the fibers were continuously calcined at a conveyance speed of 1 m/hour at 1450°C in nitrogen by using a pusher type calcination furnace. FIG. 3 illustrates the general appearance of the fiber after calcination. It can be seen that the entire fiber had shrunken as a result of weight reduction and volume shrinkage due to inorganization. Thereafter, an aqueous solution to which 1% by mass of polyethylene oxide was added was prepared, and the fiber was immersed therein and was wound on a bobbin while drying at 200°C. Thus, an inorganic fiber bundle for composite materials including an inorganic fiber for fiber bundles that was meandering in the longitudinal direction was produced.

The inorganic fiber bundle for composite materials thus obtained was constituted of a silicon carbide-based fiber (average diameter: 12.5 µm, 800 filaments/fiber bundle, sizing agent: polyethylene oxide) having a chemical composition of Si: 55.5%, O: 9.8%, C: 34.1%, and Zr: 0.6% on a mass basis. The results of measuring the meandering pitch and the meandering width are presented in Table 1. The measurement was carried out by continuously taking images of one fiber in the longitudinal direction using an optical microscope, and measuring the meandering pitch and the meandering width at arbitrary two sites from the photographs, and calculating the average values of 10 measurement values.

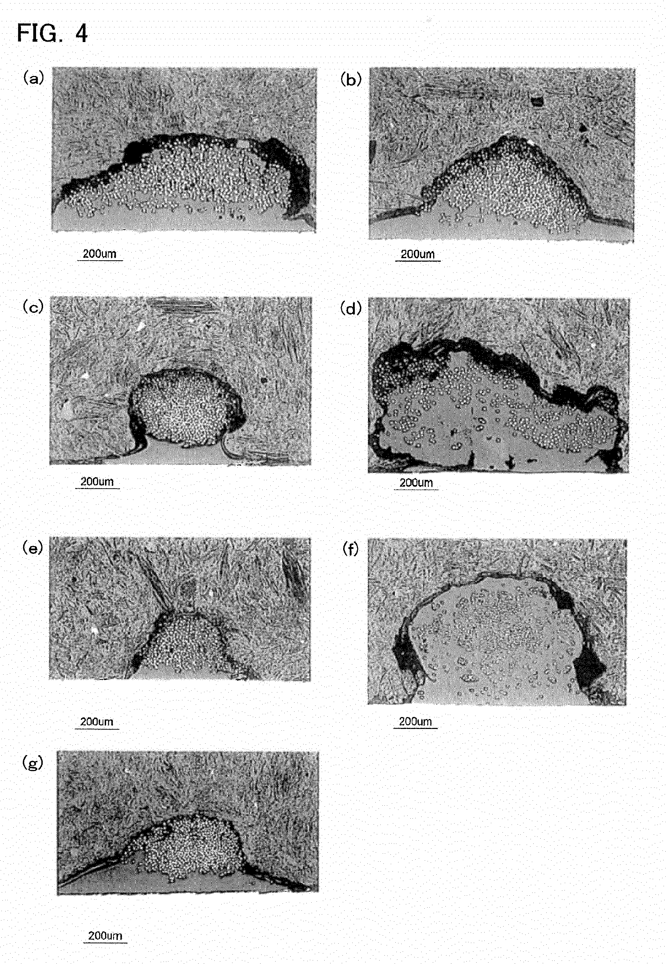

Furthermore, the cross-section of the inorganic fiber bundle for composite materials thus obtained was observed with an optical microscope. The microscopic photograph is presented in FIG. 4(a). Also, the tensile strength of the fiber bundle thus obtained was measured by the resin-impregnated strand method of JIS R7601. The results are presented in Table 1.

### Example 2

An inorganic fiber bundle for composite materials was produced in the same manner as in Example 1, except that the continuous calcination after infusibilization of Example 1 was carried out at 750°C in a nitrogen atmosphere.

The inorganic fiber bundle for composite materials thus obtained was composed of a silicon carbide-based fiber (average diameter: 12.1 µm, 800 filaments/fiber bundle, sizing agent: polyethylene oxide) having a chemical composition of Si: 55.5%, O: 9.8%, C: 34.1%, and Zr: 0.6% on a mass basis. The results of measuring the meandering pitch and the meandering width are presented in Table 1.

Furthermore, the cross-section of the inorganic fiber bundle for composite materials thus obtained was observed with an optical microscope. The microscopic photograph is presented in FIG. 4(b). Furthermore, the tensile strength of the fiber bundle thus obtained was measured by the resin-impregnated strand method of JIS R7601, and the results are presented in Table 1.

### Comparative Example 1

The infusibilized fiber bundle obtained in the production of Example 1 was subjected to continuous calcination under a tension of 200 g at 1450°C in a nitrogen atmosphere, and while being in the calcined state, the fiber bundle was immersed in an aqueous solution to which 1% by mass of polyethylene oxide was added. The fiber was wound on a bobbin while drying at 200°C. Thus, an inorganic fiber bundle for composite materials was produced.

The inorganic fiber bundle for composite materials thus obtained was composed of a silicon carbide-based fiber (average diameter: 11 µm, 800 filaments/fiber bundle, sizing agent: polyethylene oxide) having a chemical composition of Si: 55.5%, O: 9.8%, C: 34.1%, and Zr: 0.6% on a mass basis. The meandering pitch and the meandering width were unmeasurable because the fiber was straight (indicated in Table 1).

Furthermore, the cross-section of the inorganic fiber bundle for composite materials thus obtained was observed with an optical microscope. The microscopic photograph is presented in FIG. 4(c). Furthermore, the tensile strength of the fiber bundle thus obtained was measured by the resin-impregnated strand method of JIS R7601, and the results are presented in Table 1.

### Example 3

0. 5 parts by mass of polyborodiphenylsiloxane was added to 100 parts by mass of polydimethylsilane, and this mixture was heated to react for 10 hours at 380°C in a nitrogen atmosphere. Thus, about 70 parts by mass of a polycarbosilane having a weight average molecular weight of 1000 was synthesized. To this polycarbosilane, 10 parts by mass of tetrabutyl titanate was added, and the mixture was heated to react for 3 hours at 300°C in a nitrogen atmosphere to obtain polytitanocarbosilane. 1000 m of this polytitanocarbosilane was subjected to melt spinning through an 800-multihole nozzle, on a tray made of carbon into a circular shape having a diameter of about 40 cm by a spinning can method at about 250°C. Subsequently, infusibilization was carried out by heat treating the fiber for 5 hours at 180°C in air. Subsequently, the resultant fiber was placed in a calcination furnace of a batch system in a state of being placed on a tray, and was calcined for one hour at 1400°C in nitrogen. Thereafter, the fiber was immersed in an aqueous solution to which 1% by mass of polyethylene oxide was added, and was wound on a bobbin while drying at 200°C. Thus, an inorganic fiber bundle for composite materials including an inorganic fiber for fiber bundles that was meandering in the longitudinal direction was produced.

The inorganic fiber bundle for composite materials thus obtained was composed of a silicon carbide-based fiber (average diameter: 12.5 µm, 800 filaments/fiber bundle, sizing agent: polyethylene oxide) having a chemical composition of Si: 54.4%, O: 10.2%, C: 33.9%, and Ti: 1.5% on a mass basis. The results of measuring the meandering pitch and the meandering width are presented in Table 1.

Furthermore, the cross-section of the inorganic fiber bundle for composite materials thus obtained was observed with an optical microscope. The microscopic photograph is presented in FIG. 4(d). Furthermore, the tensile strength of the fiber bundle thus obtained was measured by the resin-impregnated strand method of JIS R7601, and the results are presented in Table 1.

### Comparative Example 2

Polycarbosilane was prepared in the same manner as in Example 3, and the polycarbosilane was subjected to melt spinning while the fiber was continuously wound on a drum, instead of melt spinning the fiber on a tray by a melt spinning method. Thereafter, the spun fiber was infusibilized by heat treating the fiber for 5 hours at 180°C in air. Subsequently, the fiber was subjected to continuous calcination under a tension of 100 g at 1400°C in a nitrogen atmosphere, and while being in the calcined state, the fiber was immersed in an aqueous solution to which 1% by mass of polyethylene oxide was added. The fiber was wound on a bobbin while drying at 200°C. Thus, an inorganic fiber bundle for composite materials was produced.

The inorganic fiber bundle for composite materials thus obtained was composed of a silicon carbide-based fiber (average diameter: 11.3 µm, 800 filaments/fiber bundle, sizing agent: polyethylene oxide) having a chemical composition of Si: 54.4%, O: 10.2%, C: 33.9%, and Ti: 1.5% on a mass basis. The results of measuring the meandering pitch and the meandering width are presented in Table 1.

Furthermore, the cross-section of the inorganic fiber bundle for composite materials thus obtained was observed with an optical microscope. The microscopic photograph is presented in FIG. 4(e). Furthermore, the tensile strength of the fiber bundle thus obtained was measured by the resin-impregnated strand method of JIS R7601, and the results are presented in Table 1.

### Example 4

0. 5 parts by mass of polyborodiphenylsiloxane was added to 100 parts by mass of polydimethylsilane, and this mixture was heated to react for 10 hours at 380°C in a nitrogen atmosphere. Thus, about 70 parts by mass of a polycarbosilane having a weight average molecular weight of 1000 was synthesized. To this polycarbosilane, 4 parts by mass of aluminum tri-secondary-butoxide was added, and the mixture was heated to react for 3 hours at 300°C in a nitrogen atmosphere to obtain polyaluminocarbosilane. This polyaluminocarbosilane was subjected to melt spinning through an 800-multihole nozzle while the fiber was continuously wound on a drum at about 250°C. Subsequently, the fiber was infusibilized by heat treating the fiber at 180°C for 5 hours in air. Subsequently, the fiber was subjected to continuous calcination at 1400°C in a nitrogen atmosphere, and the resultant fiber was immersed in an aqueous solution to which polyethylene oxide was added at a proportion of 1% by mass, and was wound on a bobbin while drying at 200°C. Thereby, an amorphous silicon carbide-based fiber containing 1.0% by mass of Al, 0.2% by mass of B, and 1.5% by mass of excess carbon was obtained. Subsequently, 1000 m of the fiber was drooped down on a tray made of carbon into a circular shape having a diameter of about 30 cm. The fiber was placed in a calcination furnace of a batch system in a state of being placed on a tray, and was heated for one hour at 1800°C in argon and crystallized. Thereafter, the fiber was immersed in an aqueous solution to which 1% by mass of polyethylene oxide was added, and was wound on a bobbin while drying at 200°C. Thus, an inorganic fiber bundle for composite materials including an inorganic fiber for fiber bundles that was meandering in the longitudinal direction was produced.

The inorganic fiber bundle for composite materials thus obtained was composed of a crystalline silicon carbide fiber (average diameter: 11 µm, 800 filaments/fiber bundle, sizing agent: polyethylene oxide) having a chemical composition of Si: 67.8%, C: 31%, O: 0.3%, Al: 0.84%, and B: 0.06% on a mass basis (atomic ratio Si : C : O : Al = 1 : 1.07 : 0.008 : 0.013). The results of measuring the meandering pitch and the meandering width are presented in Table 1.

Furthermore, the cross-section of the inorganic fiber bundle for composite materials thus obtained was observed with an optical microscope. The microscopic photograph is presented in FIG. 4(f). Furthermore, the tensile strength of the fiber bundle thus obtained was measured by the resin-impregnated strand method of JIS R7601, and the results are presented in Table 1.

### Comparative Example 3

The amorphous silicon carbide-based fiber containing 1.0% by mass of Al, 0.2% by mass of B, and 1.5% by mass of excess carbon, which was obtained during the production of Example 4, was crystallized by continuously heat treating at 1800°C in argon under a tension of 100 g. The fiber was immersed in an aqueous solution to which 1% by mass of polyethylene oxide was added, and was wound on a bobbin while drying at 200°C. Thus, an inorganic fiber bundle for composite materials was produced.

The inorganic fiber bundle for composite materials thus obtained was composed of a crystalline silicon carbide-based fiber (average diameter: 10 µm, 800 filaments/fiber bundle, sizing agent: polyethylene oxide) having a chemical composition of Si: 67.8%, C: 31%, O: 0.3%, Al: 0.84%, and B: 0.06% on a mass basis (atomic ratio Si : C : O : Al = 1 : 1.07 : 0. 008 : 0.013). The results of measuring the meandering pitch and the meandering width are presented in Table 1.

The cross-section of the inorganic fiber bundle for composite materials thus obtained was observed with an optical microscope. The microscopic photograph is presented in FIG. 4(g). Furthermore, the tensile strength of the fiber bundle thus obtained was measured by the resin-impregnated strand method of JIS R7601, and the results are presented in Table 1.

**[Table 1]**

| | Meandering pitch (mm) | Meandering width (mm) | Spread of fiber bundle | Fiber strength (GPa) |
|---|---|---|---|---|
| Example 1 | 14 | 2 | Large | 3.2 |
| Example 2 | 35 | 0.2 | Medium | 3.2 |
| Example 3 | 10 | 1.3 | Large | 3.3 |
| Example 4 | 6 | 0.8 | Large | 2.7 |
| Comparative Example 1 | Not measurable | Not measurable | Small | 3.3 |
| Comparative Example 2 | 80 | 0.07 | Small | 3.3 |
| Comparative Example 3 | 65 | 0.08 | Small | 2.8 |

The results obtained in Examples 1, 2, 3 and 4 and Comparative Examples 1, 2 and 3 will be described below. As seen from FIG. 4, the fiber bundles of Examples 1, 2, 3 and 4 are in a spread state as compared with Comparative Examples 1, 2 and 3, and particularly in Examples 1, 3 and 4, the fiber bundles are in a greatly spread state, so that the effect of applying the meandering pitch and the meandering width of the present invention in the longitudinal direction is recognized. On the other hand, it can be seen that even if Comparative Examples 2 and 3 meander in the longitudinal direction, the effect is almost negligible when the meandering pitch and the meandering width are out of the ranges of the present invention, and the fibers of these Comparative Examples are similar to the straight fiber of Comparative Example 1. Furthermore, it can be seen that even though the meandering pitch and the meandering width of the present invention are applied in the longitudinal direction, the effect on the fiber strength is almost negligible. As such, it can be seen that in the present invention, the distance between fibers in a fiber bundle is large and can be appropriately widened, while the fiber strength is maintained.

### Example 5

The inorganic fiber bundle for composite materials of Example 1 was woven into a three-dimensional fabric (the fiber proportions are such that X : Y : Z = 1 : 1 : 0.2). Subsequently, the sizing agent was removed by decomposition at 1000°C in argon, and then an interface layer of boron nitride and a matrix of silicon carbide were formed by a chemical vapor deposition method. Thus, a ceramic-based composite material was produced. The interface layer was produced to a thickness of about 0. 5 µm by using boron trichloride and ammonia as raw material gases and using argon as a carrier gas, at 1000°C under reduced pressure. The matrix was subjected to densification at 1000°C under reduced pressure by using methyltrichlorosilane as a raw material gas and helium as a carrier gas. The porosity obtained after the matrix formation was about 10%.

A portion of the three-dimensional fabric before compositization was unwoven, and fiber bundles were extracted. The tensile strength was measured by the resin-impregnated strand method of JIS R7601. Furthermore, a tensile test specimen was fabricated from the ceramic-based composite material thus produced, and the tensile strength and the fracture strain at room temperature were measured. Also, the time taken by the ceramic-based composite material to fracture at 1000°C in air atmosphere when a stress equivalent to 60% of the tensile strength at room temperature was applied, was measured, and thereby durability was evaluated. The tensile strength of the fiber extracted from the three-dimensional fabric, the tensile strength and fracture strain at room temperature of the ceramic-based composite material thus obtained, and the time taken to fracture at 1000°C in the atmosphere when a stress equivalent to 60% of the tensile strength at room temperature was applied, are presented in Table 2.

### Example 6

A ceramic-based composite material was produced in the same manner as in Example 5, by using the inorganic fiber bundle for composite materials of Example 2.

The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

### Example 7

A ceramic-based composite material was produced in the same manner as in Example 5, by using the inorganic fiber bundle for composite materials of Example 3.

The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

### Example 8

A ceramic-based composite material was produced in the same manner as in Example 5, by using the inorganic fiber bundle for composite materials of Example 4.

The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

### Comparative Example 4

A ceramic-based composite material was produced in the same manner as in Example 5, by using the inorganic fiber bundle for composite materials of Comparative Example 1, and an evaluation was carried out. The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

### Comparative Example 5

A ceramic-based composite material was produced in the same manner as in Example 7, by using the inorganic fiber bundle for composite materials of Comparative Example 2, and an evaluation was carried out. The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

### Comparative Example 6

A ceramic-based composite material was produced in the same manner as in Example 8, by using the inorganic fiber bundle for composite materials of Comparative Example 3, and an evaluation was carried out. The tensile strength of the fiber extracted from the three-dimensional fabric, the tensile strength and fracture strain at room temperature of the ceramic-based composite material thus obtained, and the time taken to fracture at 1000°C in air atmosphere when a stress equivalent to 60% of the tensile strength at room temperature was applied, are presented in Table 2.

**[Table 2]**

| | Fiber bundle | Fiber strength (GPa) | Tensile strength (MPa) | Fracture strain (%) | Time to fracture (hr) |
|---|---|---|---|---|---|
| Example 5 | Example 1 | 3.2 | 365 | 0.8 | 9 |
| Example 6 | Example 2 | 3.2 | 320 | 0.6 | 6.5 |
| Example 7 | Example 3 | 3.3 | 370 | 0.8 | 6 |
| Example 8 | Example 4 | 2.6 | 300 | 0.5 | 15 |
| Comparative Example 4 | Comparative Example 1 | 3.3 | 240 | 0.4 | 2.5 |
| Comparative Example 5 | Comparative Example 2 | 3.3 | 235 | 0.4 | 1.5 |
| Comparative Example 6 | Comparative Example 3 | 2.7 | 170 | 0.3 | 3.5 |

The results obtained in Examples 5, 6, 7, and 8 and Comparative Examples 4, 5, and 6 will be described below. In the tensile strength of the fibers, a decrease was not recognized in all of the fibers, and it can be seen that although a particular meandering pitch and a particular meandering width are applied in the longitudinal direction, and complicated weaving was carried out as in the case of a three-dimensional fabric, the tensile strengths of the fibers did not decrease.

In regard to the tensile strength and fracture strain at room temperature of the ceramic-based composite materials, the ceramic-based composite materials of Examples 5, 6, 7, and 8 respectively exhibited higher values than Comparative Examples 4, 5, and 6 in terms of both the tensile strength and the fracture strain, although Example 6 exhibited slightly lower values. From an observation of fracture surfaces, it was confirmed that in Examples 5, 7, and 8, the fibers in a fiber bundle were not in contact, and the interface layer of boron nitride was uniformly formed on the surfaces of the respective fibers. Also, significant pullout of the fibers was observed, and thus it was confirmed that the interface layer functioned effectively. This is considered as the cause of obtaining high strength and high fracture strain. In Example 6, since the spread of the fiber bundle of Example 2 is smaller than the spread of the fiber bundles of Examples 1, 3, and 4, contact between some fibers in the fiber bundle was recognized as compared with Examples 5, 7, and 8. It is believed that in these contact sites, the interface layer of boron nitride was not formed, and less pullout of the fibers occurred, so that these caused slightly lower values in Example 6.

In Comparative Examples 4, 5, and 6, most of the fibers in the fiber bundles are in contact with each other, and a interface layer was not formed at the contact sites. Furthermore, less pullout of the fibers occurred, and fracture of fibers occurred at the contact points of the fibers. Thus, it was confirmed that the contact points caused stress concentration. As such, although there was no decrease in the fiber strength until the fibers were fabricated into three-dimensional fabrics, stress concentration by the contact points between fibers and non-uniform interface layer are considered to be cause of low strength and low fracture strain.

In regard to the time taken by the ceramic-based composite materials to fracture at 1000°C in air atmosphere while a stress equivalent to 60% of the tensile strength at room temperature is applied, the ceramic-based composite materials of Examples 5, 6, 7, and 8 respectively exhibited longer fracture time than Comparative Examples 4, 5, and 6, although Example 6 exhibited a slightly lower value. In the observation of fracture surfaces of Examples 5, 7, and 8, significant pullout of fibers was observed, although less pullout of fibers occurred as compared with the fracture surfaces after a tensile test at room temperature, and the formation of glass layer due to the oxidation of the fiber or the interface layer occurred at a low level. In Example 6, a glass layer was observed to a slightly greater extent as compared with Examples 5, 7, and 8 because of the contact between the fibers, and this is considered as a cause of the slightly lower value of the fracture time. Meanwhile, the fracture time was the longest in Example 8 and the shortest in Example 7 among the Examples. This is because the fracture time was dependent on the heat resistance of the fibers themselves, and because heat resistance of the fiber of Example 4 was the most excellent, while heat resistance of the fiber of Example 3 was the poorest.

In the observation of fracture surfaces of Comparative Examples 4, 5, and 6, most of the fibers in the fiber bundles were in contact, and the glass layer was observed to a significant extent in the vicinity of the contact points. It is considered that as a result of such preferential formation of a large amount of glass layer, the fibers were strongly bonded to each other and caused stress concentration, caused brittle fracture, and caused shortening of the fracture time. Meanwhile, the fracture time was the longest in Comparative Example 6 and the shortest in Comparative Example 5 among the Comparative Examples. This is because the fracture time was dependent on the heat resistance of the fibers themselves as described above, and because heat resistance of the fiber of Comparative Example 3 was the most excellent, while heat resistance of the fiber of Comparative Example 2 was the poorest.

### Industrial Applicability

The present invention can be used in the production of an inorganic fiber bundle for the reinforcing fibers for ceramic-based composite materials, and the production of a ceramic-based composite material reinforced with this fiber.

## Claims

1. An inorganic fiber for fiber bundles that constitutes an inorganic fiber bundle for composite materials, the inorganic fiber meandering in the longitudinal direction and having a meandering pitch of 3 mm to 40 mm and a meandering width of 0.1 mm to 5 mm.

2. The inorganic fiber for fiber bundles according to claim 1, wherein the element composition includes Si: 45% to 60% by mass, Ti or Zr: 0.2% to 5% by mass, C: 20% to 45% by mass, and O: 0.1% to 20.0% by mass.

3. The inorganic fiber for fiber bundles according to claim 1, wherein the inorganic fiber is a crystalline silicon carbide fiber having a sintered structure of SiC, which has a density of 2.7 g/cm³ or greater, a tensile strength of 2 GPa or greater, and an elastic modulus of 250 GPa or greater, and contains Si: 50% to 70% by mass, C: 28% to 45% by mass, Al: 0.06% to 3.8% by mass, and B: 0.06% to 0.5% by mass.

4. A method for producing an inorganic fiber for fiber bundles that constitutes an inorganic fiber bundle for composite materials, the method comprising spinning an organosilicon polymer, infusibilizing the spun fiber thus obtained, and calcining the infusibilized fiber thus obtained in an inert atmosphere, and the calcination treatment being carried out without applying a tension to the infusibilized fiber.

5. A method for producing an inorganic fiber for fiber bundles that constitutes an inorganic fiber bundle for composite materials, the method comprising calcining an amorphous silicon carbide-based fiber containing 0.05% to 3% by mass of Al, 0.05% to 0.4% by mass of B, and 1% to 3% by mass of excess carbon at a temperature of 1600°C to 2100°C and in an inert atmosphere, and crystallizing the calcined fiber, and the calcination treatment being carried out without applying a tension to the amorphous silicon carbide-based fiber.

6. An inorganic fiber bundle for composite materials, comprising the inorganic fiber for fiber bundles according to any one of claims 1 to 3.

7. A ceramic-based composite material comprising the inorganic fiber bundle for composite materials according to claim 6 as a reinforcing fiber, and a ceramic as a matrix.

8. The ceramic-based composite material according to claim 7, wherein the form of the inorganic fiber bundle for composite materials is a two-dimensional or three-dimensional fabric, a unidirectional sheet-like object, or a laminate thereof.
